(19) Europäisches Patentamt
European Patent Office
Office européen des brevets

(11) EP 2 009 728 B1

(12) EUROPÄISCHE PATENTSCHRIFT

(45) Veröffentlichungstag und Bekanntmachung des Hinweises auf die Patenterteilung:
**22.09.2010 Patentblatt 2010/38**

(51) Int Cl.:
***H01M 8/10*** *(2006.01)* ***C08J 5/22*** *(2006.01)*

(21) Anmeldenummer: **08008793.5**

(22) Anmeldetag: **10.05.2008**

(54) **Verfahren zur Herstellung eines sulfonierten Poly(1,3,4-oxadiazol)-Polymers**

Method for manufacturing a sulfonated poly(1,3,4-oxadiazol) polymer

Procédé de fabrication d'un polymère poly(1,3,4-oxadiazol) sulfoné

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.06.2007 DE 102007029542**

(43) Veröffentlichungstag der Anmeldung:
**31.12.2008 Patentblatt 2009/01**

(73) Patentinhaber: **GKSS-Forschungszentrum Geesthacht GmbH**
**21502 Geesthacht (DE)**

(72) Erfinder:
- **De Figueiredo Gomes, Dominique**
  **21641 Apensen (DE)**
- **Roeder Jesus, Jerusa**
  **53721 Siegburg (DE)**
- **Nunes, Suzana**
  **21502 Geesthacht (DE)**

(74) Vertreter: **Seemann, Ralph et al**
**Seemann & Partner,**
**Ballindamm 3**
**20095 Hamburg (DE)**

(56) Entgegenhaltungen:
- **GOMES D ET AL: "Study of the synthesis of poly (4,4'-diphenylether-1,3,4-oxadiazole) in solutions of poly(phosphoric acid)" 1. Februar 2001 (2001-02-01), POLYMER, ELSEVIER SCIENCE PUBLISHERS B.V, GB, PAGE(S) 851 - 865 , XP004218053 ISSN: 0032-3861 * das ganze Dokument ***
- **GOMES ET AL: "Characterization of partially sulfonated polyoxadiazoles and oxadiazole-triazole copolymers" JOURNAL OF MEMBRANE SCIENCE, ELSEVIER SCIENTIFIC PUBL.COMPANY. AMSTERDAM, NL, Bd. 295, Nr. 1-2, 19. April 2007 (2007-04-19), Seiten 121-129, XP022035285 ISSN: 0376-7388**
- **GOMES D ET AL: "Effects of reaction variables on the reproducibility of the syntheses of poly-1,3,4-oxadiazole" 12. Juli 2004 (2004-07-12), POLYMER, ELSEVIER SCIENCE PUBLISHERS B.V, GB, PAGE(S) 4997 - 5004 , XP004518189 ISSN: 0032-3861 * Seite 4999 ***
- **HENSEMA E R ET AL: "SYNTHESES AND PROPERTIES OF RELATED POLYOXADIAZOLES AND POLYTRIAZOLES" JOURNAL OF POLYMER SCIENCE, POLYMER CHEMISTRY EDITION, INTERSCIENCE POUBLISHERS, NEW YORK, NY, US, Bd. 32, Nr. 3, 1. Februar 1994 (1994-02-01), Seiten 527-537, XP000435373 ISSN: 0360-6376**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 009 728 B1

## Beschreibung

Die Erfindung betrifft ein Verfahren zur Herstellung eines sulfonierten Poly(1,3,4-oxadiazol)-Polymers. Die Erfindung betrifft weiter ein sulfoniertes Poly(1,3,4-oxadiazol)-Polymer, eine Membran für Brennstoffzellen, eine Brennstoffzelle sowie ein Verfahren zur Herstellung einer Brennstoffzelle,

Brennstoffzellen benötigen protonenleitende Membranen. Solchen Membranen sind beispielsweise Polymerelektrolytmembranen (PEM). Eine bekannte PEM auf der Basis einer Perfluorkohlenstoff-Polymerelektrolytmembran ist die von DuPont entwickelte Nafion-Membran (JP 112 04 119 A).

In der Entwicklung befinden sich zwei Arten von PEM-Brennstoffzellen, nämlich Niedertemperaturzellen, die bis etwa 90˚C betrieben werden und Hochtemperaturzellen, die bis etwa 180˚C betrieben werden.

Die Nafion-Membran weist keine genügende Wärmebeständigkeit auf, so dass sie nicht bei einer über 80˚C hinaus gehenden Temperatur verwendet werden kann (siehe auch US 4 330 654). Niedertemperaturbrennstoffzellen reagieren empfindlich auf Kohlenmonoxid. Dieses Gas kann den Anodenkatalysator blockieren, was zu einem Leistungsabfall führt. Damit Protonen geleitet werden können, ist eine Befeuchtung der Membran unerlässlich. Darüber hinaus sind die während der Synthese oder Entsorgung in die Umwelt eingetragenen Belastungen groß, da eine große Menge an Fluor verwendet wird.

In den vergangenen Jahren wurde an der Entwicklung von hochfunktionalen Polymermaterialien gearbeitet, die nicht nur hohe Wärmebeständigkeit und hohe chemische Beständigkeit, sondern ebenfalls elektrische Leitfähigkeit aufweisen. Als ein Verfahren zur Herstellung eines Materials mit elektrischer Leitfähigkeit wurde der Versuch unternommen, in den Polymeren ionenaustauschbare funktionelle Gruppen (z.B. Sulfogruppen) einzubringen. So offenbart JP 111 16 679 A Polyarylenethersulfone mit einer direkt an einen aromatischen Ring der Hauptkette gebundenen Sulfogruppe. Weiter offenbart JP 907 39 08 A Polybenzimidazole mit einer direkt an einen aromatischen Ring der Hauptkette gebundenen Sulfoalkylgruppe. Weitere Beispiele sind SPEEK (sulfonierte Poly(ether ether ketone)), SPEES (sulfonierte Poly(ether ether sulfone)), SPI (sulfonierte Polyimide), Polybenzimidazole, Polyether Sulfone etc.

Polyoxadiazole weisen neben hoher chemischer und thermischer Stabilität hohe Glasübergangstemperaturen auf. Für Anwendungen in Membranen für Brennstoffzellen, Ultrafiltrationen, Elektrodialysen, die eine hohe elektrische Leitfähigkeit voraussetzen, können an diesen Polymeren ionenaustauschbare funktionelle Gruppen wie z.B. Sulfogruppen eingebracht werden.

Durch Iwakura et al. (Y. Iwakura, K. Uno, S. Hara, J. Polym. Sci.: Part A 1965, 3, 45 bis 54) wurde erstmals ein Verfahren zur Produktion eines Polyoxadiazols basierend auf der Reaktion eines Hydrazinsulfats mit Dicarboxylsäure aufgezeigt. Nach dieser Publikation blieben die Korrelationen zwischen den Eigenschaften der erzeugten Polyoxadiazole mit den Syntheseparametern lange Zeit unklar. Bislang sind viele Aspekte bezüglich der Synthese von Polyoxadiazolen mit hohem Molekulargewicht in Polyphosphorsäure nicht eingehend studiert und verstanden worden.

Gomes et al. (D. Gomes, C.P. Borges, J.C. Pinto, Polymer 2001, 42, 851 bis 865; Polymer 2004, 45, 4997 bis 5004; D. Gomes, S.P. Nunes, J.C. Pinto, C.P. Borges, Polymer 2003, 44, 3633 bis 3639) haben eine systematische Studie des Einflusses von verschiedenen Syntheseparametern auf die endgültigen Eigenschaften eine Polyoxadiazols, das eine Diphenylethergruppe aufweist, die mit der Hauptkette des Polymers verbunden ist, ausgeführt. Darin wurde mit Hilfe eines statistischen experimentellen Designs eine Optimierung der Polymereigenschaften, z.B. das Molekulargewicht und restliche Hydrazidgruppen, vorgenommen.

Das Dokument Gomes et al., "Study of the synthesis of poly(4,4'-diphenylether-1, 3, 4-oxadiazole) in solutions of poly(phosphoric acid", Polymer 42 (2001) 851 - 865, betrifft die Synthese von Polyoxadiazolen in Polyphosphorsäure. Das Polyoxadiazol wurde unter variierenden experimentellen Bedingungen mit den Ausgangsstoffen Hydrazinsulfat und Diphenylether durchgeführt, wobei Diphenylether zunächst in Polyphosphorsäure aufgelöst und später Hydrazinsulfat hinzugefügt wurde. Die Experimente fanden unter einer trockenen Stickstoffatmosphäre statt.

In JP 63118331 AA ist ein Verfahren zur Herstellung eines Polyoxadiazols mit hoher Effizienz offenbart, wobei eine Dicarboxylsäure und ein Hydrazinsulfat kondensiert werden unter Benutzung einer Mischung aus phosphorigem Pentoxid und Methansulfonsäure als Kondensationsmittel.

RU 2263685 offenbart ein Verfahren zur Herstellung von Poly-(1,3,4-oxadiazol) mit Molekularmassen von 60.000 bis 450.000 Da. Das Poly-(1,3,4-oxadiazol) kann in der Entwicklung von hochthermostabilen, chemostabilen und mechanisch stabilen Materialien verwendet werden. Das Verfahren beinhaltet eine Polykondensationsreaktion von Dicarboxylsäure mit Hydrazinderivaten oder mit Dicarboxylsäure Dihydrazid bei einer Temperatur von 190˚C bis 220˚C, die in einem Lösungsmittel für eine Dauer von drei bis sieben Stunden ausgeführt wird und in der Anwesenheit von Triphenylphosphit stattfindet.

Gomes et al. (2004, s. o.) haben die experimentellen Voraussetzungen optimiert, unter denen ohne Zugabe von Triphenylphosphit reproduzierbare Polyoxadiazol-Proben mit hohem Molekulargewicht, hoher Löslichkeit in organischen Lösungsmitteln und niedrigen restlichen Hydrazidgruppen dargestellt werden können. Allerdings wurde die Sulfonierung der Polyoxadiazole mit Hydrazinsulfat bei Temperaturen von über 140˚C nicht untersucht. Es wurde auch in der Literatur vollständig übersehen.

Hensema et al. (E.R. Hensema, J.P. Boom, M.H.V. Mulder, C.A. Smolders, Polym. Sci.: Part A: Polym. Chem. 1994, 32, 513 bis 525; E.R. Hensema, M.E.R. Sena, M.H.V. Mulder, C.A. Smolders, J. Polym. Sci.: Part A: Polym. Chem. 1994, 32, 527 bis 537) haben Schwefel bis zu 0,9 Gew.-% durch Elementaranalyse nachgewiesen. Es wurde jedoch angenommen, dass der restliche Schwefel als freies $H_2SO_4$ anwesend und nicht an das Polymer gebunden war. Differenzen in der Elementaranalyse zwischen den experimentellen und den theoretischen Werten wurden als restliche Unreinheiten, am wahrscheinlichsten als Phosphorsäure, interpretiert.

Gomes et al. (D. Gomes, J. Roeder, M.L. Ponce, S.P. Nunes, "Characterization of partially sulfonated polyoxadiazoles and oxadiazole-triazole copolymers", Journal of Membrane Science 295 (2007) 121 - 129) haben die Sulfonierung von Polyoxadiazol während der Synthese des Polyoxadiazols unter Verwendung von Hydrazinsulfat in Polyphosphorsäure experimentell nachgewiesen. Die Struktur des Polymers wurde qualitativ und quantitativ durch Elementaranalyse, $^1$H-NMR und FTIR charakterisiert. Es wurde ein Polymer mit hohem Molekulargewicht (358.000 g/mol) hergestellt, das eine hohe Stabilität gegenüber Oxidation aufweist. Das Polymer erlaubt die Herstellung von mechanisch stabilen Membranen mit hohem Speichermodul (ca. 4 GPa bei 100°C). Obwohl das sulfonierte Polymer hergestellt werden konnte, indem die durch Gomes et al., 2004 (s. o.) beschriebenen optimierten Snythesebedingungen benutzt werden, wurde ein niedriger Sulfonierungsgrad von 17 bis 18 bei einem molaren Verhältnis von Schwefel zu Kohlenstoff (S/C) von 0,065 bei 4,1 Gew.-% Schwefel gemessen.

Roeder et al. (J. Roeder, D. Gomes, M.L. Ponce, V. Abetz und S.P. Nunes, Makromol. Chem. Phys. 2007, 208, 467 bis 473) haben den Effekt von Schwefelsäureprotonierung auf die Eigenschaften von sulfonierten Poly(1,3,4-oxadiazol)-Membranen mit Hilfe von Infrarot- und Impedanzspektroskopie untersucht. Zur Synthese von sulfoniertem Poly(1,3,4-oxadiazol) wurde, basierend auf der Publikation von Gomes et al., 2004 (s. o.), drei Stunden lang Hydrazinsulfatsalz und eine aromatische Dicarboxylsäure in Polyphosphorsäure verwendet, wobei eine Optimierung der Synthesebedingungen ausgeführt wurde. Wiederum wurde ein niedriger Sulfonierungsgrad von 15 bis 17 bei einem molaren Verhältnis von Schwefel zu Kohlenstoff (S/C) von 0,0573 bis 0,0637 festgestellt.

Perfluorierte Polymerelektrolytmembranen wie beispielsweise die Nafion-Membran haben in der Praxis wegen ihrer exzellenten chemischen Stabilität und Protonenleitfähigkeit in großem Umfang Verwendung als Polymerelektrolyte für Brennstoffzellen (PEFCs) gefunden. Nachteilig bei diesen Membranen sind ihre hohen Kosten und der Abfall der Protonenleitfähigkeit bei Temperaturen oberhalb von 100°C und bei niedriger Feuchtigkeit. Daher wurde in der Vergangenheit eine Vielzahl neuer Polymerelektrolytmaterialien entwickelt, die bei niedrigeren Kosten stabil und darüber hinaus in der Lage sind, ihre Protonenleitfähigkeit auch bei hohen Temperaturen und niedriger Feuchtigkeit aufrecht zu erhalten.

Um mit den nach dem Stand der Technik in elektrochemischen Zellen verwendeten perfluorierten Polymeren konkurrenzfähig zu werden, müssen sulfonierte Polymere hohe Ionenleitfähigkeitswerte erreichen, die durch eine Steigerung des Sulfonierungsgrades erreicht werden können.

Neben der Steigerung der Ionenleitfähigkeit kann die Sulfonierung von Polymeren auch deren übrige Eigenschaften, etwa die Benetzbarkeit, Anti-Fouling-Eigenschaften und die Löslichkeit in Lösungen für die Verwendung der Polymere verbessern und zu höherer Gaspermeabilität und Protonenleitfähigkeit führen.

Zur Sulfonierung von Polymeren können bei der Synthese sulfonierte Monomere verwendet werden oder alternativ Polymere unter verschiedenen Bedingungen mit Sulfonierungsmitteln, wie z.B. Schwefelsäure, Schwefeltrioxid, Trimethlysilylchlorosulfonat, Chlorsulfonsäure oder einer Mischung dieser Reagenzien in Verbindung gebracht wird. Die Wahl der Sulfonierungsbedingungen hängt von verschiedenen Faktoren ab, etwa von der Reaktivität des Polymers und des Sulfonierungsmittels, von der Sulfonierungszeit, dem angestrebten Funktionalisierungsgrad, der Homogenität, der Degradation, dem Cross-Linking und der Löslichkeit des sulfonierten Polymers.

In DE 102 46 373 A1 ist eine auf Polyazol basierte protonenleitfähige Polymermembran offenbart, die durch Erhitzung einer Mischung aus (hetero)aromatischen Monomeren (Tetraamino-Verbindungen und Polycarboxylsäure oder Diamino-Carboxylsäure, von denen wenigstens einige Sulfonsäuregruppen aufweisen) in Polyphosphorsäure erhalten wurde und die anschließende Herstellung einer selbsttragenden Membran beschrieben.

In CA 2499946 A1 ist eine neuartige Klasse von Protonenaustauschmembranmaterialien beschrieben, sulfonierte Poly(phthalazinone). Die Sulfonierungsreaktionen wurden bei Raumtemperatur unter Verwendung von Mischungen aus 95 % bis 98 % konzentrierter Salzsäure und 27 % bis 33 % rauchender Salzsäure mit verschiedenen Säureverhältnissen ausgeführt.

US 4 634 530 A beschreibt ein Verfahren zum chemischen Modifizieren einer vorgefertigten semipermeablen Polybenzimidazolmembran. Das Verfahren umfasste den Schritt, die Membran durch Kontaktieren mit einem Sulfonierungsmittel zu sulfonieren. Anschließend wurde die Membran unter einer inerten Atmosphäre auf eine Temperatur und für eine Dauer erhitzt, die ausreichten, die Ionenverbindungen, die im Kontaktierungsschritt geformt worden waren, in permanente, kovalente Bindungen, umzuwandeln, so dass eine semipermeable Membran aus kovalent gebundenem sulfonierten Polybenzimidazol hergestellt wurde.

In KR 102006001626 AA ist ein Verfahren zur Herstellung eines sulfonierten Polybenzimidazols offenbart, wobei die Polymerisation in Anwesenheit wenigstens eines aus einer Gruppe aus Kaliumcarbonat, Natriumcarbonat und Lithiumcarbonat ausgewählten Katalysators ausgeführt wurde.

Angesichts dieses Standes der Technik liegt der Erfindung die Aufgabe zugrunde, Polymerelektrolyte zum Einsatz in elektrochemischen Vorrichtungen herzustellen, die eine hohe Protonenleitfähigkeit bei hohen Temperaturen und/oder bei niedriger Feuchtigkeit aufweisen, die im Betrieb stabil, einfach handhabbar und mit niedrigen Kosten herstellbar sind.

Diese der Erfindung zugrunde liegende Aufgabe wird gelöst durch ein Verfahren zur Herstellung eines sulfonierten Poly(1,3,4-oxadiazol)-Polymers, bei dem Sulfonsäuregruppen kovalent mit der Hauptkette des Polymers verbunden sind, mit einem Molekulargewicht in der Größenordnung von $10^5$ g/mol und einem molaren Verhältnis von Schwefel zu Kohlenstoff (S/C) zwischen 0,085 und 0,38, in einer einstufigen Polykondensationsreaktion eines Hydrazinsulfatsalzes mit nicht sulfonierten Dicarboxylsäuren oder deren nicht sulfonierten Derivaten in Polyphosphorsäure mit den folgenden Schritten:

- Erhitzen der Polyphosphorsäure auf eine Temperatur von 100 ˚C,

- Herstellen einer Lösung durch Vermischen des Hydrazinsulfatsalzes mit einer oder mehreren Dicarboxylsäuren oder deren Derivaten in Polyphosphorsäure,_wobei das molare Verdünnungsverhältnis von Polyphosphorsäure zu Hydrazinsulfatsalz bei 10 und das molare Monomerverhältnis von Hydrazinsulfatsalz zu Dicarboxylsäure oder deren Derivaten bei 1,2 gehalten werden,

- Erhitzen der Lösung in einem Temperaturbereich von 160 ˚C bis 200 ˚C unter einer inerten Gasatmosphäre in einem Zeitraum zwischen 4 und 24 Stunden,

- Ausfällen des Polymers in einer Basislösung.

Vorteilhafterweise wird das Polymer in der Basislösung neutralisiert.

Mit diesem erfindungsgemäßen Verfahren ist es möglich, sulfonierte Polyoxadiazole mit Sulfonierungsgrad oberhalb von 22, einem molaren Verhältnis von Schwefel zu Kohlenstoff (S/C) im Bereich von 0,085 bis 0,38 und molarem Gewicht in der Größenordnung von $10^5$ g/mol herzustellen, die hohe Protonenleitfähigkeit bei niedriger Feuchtigkeit und exzellente mechanische Eigenschaften aufweisen sowie oxidativ, chemisch und thermisch stabil sind. Solche Polymere konnten zuvor nicht synthetisiert werden.

Die einstufige Polykondensationsreaktion erspart Zeit und Kosten und führt zu einem höheren Sulfonierungsgrad.

Die nicht sulfonierte Dicarboxylgruppe im erfindungsgemäßen Verfahren oder deren nicht sulfonierte Derivate umfassen vorzugsweise eine aromatische und/oder heteroaromatische Dicarboxylsäure oder deren Derivate. Ebenfalls vorgesehen sind die Verwendung von Dicarboxylsäuren oder Mischungen aus Dicarboxylsäuren und Dicarboxylsäurediestern.

Die vorzugsweise aromatische oder heteroaromatische Gruppe, d.h. die aromatische und/oder heteroaromatische Dicarboxylsäure oder deren Derivat weisen vorzugsweise wenigstens einen Elektronen-Donor-Substituenten oder ein Multi-Ring-System mit wenigstens einem -O-Verbindungsglied zwischen den aromatischen Ringen auf.

Vorzugsweise erfolgt das Erhitzen in einem Temperaturbereich zwischen 160 ˚C und 180 ˚C.

Das Erhitzen erfolgt bevorzugt für eine Dauer bis zu 16 h, insbesondere bevorzugt zwischen 6 und 8 h. Wenn größere Mengen an Monomer benutzt werden, werden die Verfahrensfluktuationen verringert und das Molekulargewicht erhöht.

Ein Poly(1,3,4-oxadiazol) ist im Zusammenhang der Erfindung als ein Polymer definiert, das wenigstens einen konjugierten Ring aufweist, der zwei Stickstoffatome und ein Sauerstoffatom aufweist. Spezifische Poly(1,3,4-oxadiazole), die benutzt werden können, umfassen Poly(ethersulfonoxadiazol), Poly(etherketonoxadazol), Poly(etheramidoxadiazol), Poly(etherimidoxadiazol). Das bevorzugte Polymer hat sich wiederholende Einheiten der folgenden Strukturformel:

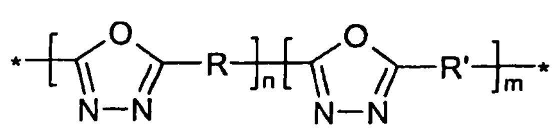

Vorzugsweise weisen die Reste R, R' aromatische oder heteroaromatische Gruppen auf, die wenigstens einen Elektronen-Donor-Substituenten aufweisen oder ein Multi-Ring-System, das wenigstens ein -O-Verbindungsglied zwischen den aromatischen Ringen aufweist, um die Sulfonierungsreaktion zu begünstigen.

Die der Erfindung zugrunde liegende Aufgabe wird auch gelöst durch ein sulfoniertes Poly(1,3,4-oxadiazol)-Polymer, insbesondere Homo- und/oder Copolymer, bei dem Sulfonsäuregruppen kovalent mit der Hauptkette des Polymers verbunden sind, mit einem Molekulargewicht in der Größenordnung von $10^5$ g/mol und einem molaren Verhältnis von Schwefel zu Kohlenstoff (S/C) zwischen 0,085 und 0,38, erhältlich in dem oben genannten erfindungsgemäßen Verfahren. Zur Vermeidung von Wiederholungen wird auf das oben Ausgeführte verwiesen.

Vorzugsweise ist oder enthält das sulfonierte Poly(1,3,4-oxadiazol)-Polymer ein sulfoniertes Poly(1,3,4-oxadiazol)-Homopolymer und/oder ein sulfoniertes Poly(1,3,4-oxadiazol)-Copolymer.

Vorteilhafterweise, insbesondere für eine hohe Protonenleitfähigkeit, weist das sulfonierte Poly(1,3,4-oxadiazol)-Polymer einen Sulfonierungsgrad von 23 bis 100 auf, vorzugsweise zwischen 28 und 100, weiter bevorzugt zwischen 35 und 100. Dabei ist der Sulfonierungsgrad als 100 definiert, wenn jeder Phenylenring der Polymerkette eine chemisch an den Phenylenring gebundene Sulfonsäuregruppe aufweist. Der Sulfonierungsgrad wird mittels Elementaranalyse, NMR, Infrarotspektroskopie oder Titration ermittelt. Eine chemische Bindung ist in diesem Zusammenhang insbesondere eine kovalente Bindung.

Ebenfalls vorzugsweise weist das sulfonierte Poly(1,3,4-oxadiazol)-Polymer ein molares Verhältnis von Schwefel zu Kohlenstoff (S/C) zwischen 0,1 und 0,38 auf, ferner insbesondere bevorzugt zwischen 0,125 und 0,38. Das Schwefel-zu-Kohlenstoff-Verhältnis (S/C) kann mittels Elementaranalyse ermittelt werden.

Vorzugsweise ist das Poly(1,3,4-oxadiazol) ein Poly(ethersulfonoxadiazol), ein Poly(etherketonoxadiazol), ein Poly(etheramidoxadiazol) oder ein Poly(etherimidoxadiazol). Das erfindungsgemäße sulfonierte Poly(1,3,4-oxadiazol)-Polymer weist eine hohe Oxidationsstabilität auf. Insbesondere vorzugsweise behält das Polymer nach einem einstündigen Eintauchen in Fenton's Reagenz bei 80 ˚C wenigstens 98 % seines Gewichts.

Die der Erfindung zugrunde liegende Aufgabe wird ebenfalls gelöst durch eine Membran für Brennstoffzellen aus einem sulfonierten Poly(1,3,4-oxadiazol)-Polymer, das wie oben beschrieben hergestellt ist und die oben beschriebenen Eigenschaften aufweist, bei dem Sulfonsäuregruppen mit der Hauptkette des Polymers verbunden sind, wobei die Membran eine Feed-Seite und eine Permeat-Seite aufweist.

Vorzugsweise umfasst die Membran eine Trennschicht, die Mischungen oder Copolymere des sulfonierten Poly(1,3,4-oxadiazol)-Polymers mit anderen Polymeren enthält.

Weiter vorzugsweise ist die Membran mit Säuren und/oder Oligomeren dotiert, die funktionelle Säuregruppen und/oder Polymere mit funktionellen Säuregruppen aufweisen. Damit lassen sich die Eigenschaften der Membran weiter regulieren.

Vorteilhafterweise weist die Membran eine Protonenleitfähigkeit von wenigstens $4{,}9 \times 10^{-2}$ S/cm bei 80 ˚C und relativer Feuchtigkeit von 15%auf.

Schließlich wird die der Erfindung zugrunde liegende Aufgabe auch durch eine Brennstoffzelle mit einer oben beschriebenen Membran gelöst. Dabei arbeitet die Brennstoffzelle vorzugsweise auch bei einer relativen Feuchtigkeit von weniger als 20 %.

Die erfindungsgemäße Herstellung der Brennstoffzelle umfasst dabei folgende Schritte:

- Es wird eine Membran hergestellt, die eine Feed-Seite und eine Permeat-Seite hat;
- die Elektrolytmembran wird zwischen zwei poröse Katalysatorelektroden aus Platin oder einer Platinlegierung gebracht, wobei die Feed-Seite der Membran eine Anode kontaktiert und die Permeat-Seite der Membran eine Kathode kontaktiert;
- ein Brennstoff, der die zu reagierenden Komponenten beinhaltet, wird in die Anode geführt, wobei Protonen durch die Membran migrieren können;
- in den Raum mit der Kathode wird ein Oxidationsmittel, vorzugsweise Sauerstoff, gefüllt;
- anschließend werden die dabei erhaltenen Komponenten in den Kathodenraum zurückgezogen.

Die Membran umfasst eine Schicht aus einem Polymerelektrolyt mit dem sulfonierten Poly(1,3,4-oxadiazol)-Polymer und/oder Copolymeren, die aus dem sulfonierten Poly(1,3,4-oxadiazol)-Polymer abgeleitet sind, wobei in der Polymerelektrolytschicht Sulfonsäuregruppen chemisch bzw. kovalent an die Polymerhauptketten gebunden sind. Die Trennschicht kann auch Mischungen oder Copolymere der oben definierten Polymere mit anderen Polymeren aufweisen.

Als Brennstoff, der der Anode zugeführt wird, kann Wasserstoff, Methanol oder Ethanol verwendet werden, wobei letztere als Flüssigkeiten oder als Mischungen aus Wasser und gasförmigem Methanol bzw. Ethanol verwendet werden können.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:

Fig. 1 ein FTIR-Spektrum einer sulfonierten Poly(1,3,4-oxadiazol)-Membran,

Fig. 2 den Sulfonierungsgrad von sulfonierten Poly(1,3,4-oxadiazol)-Proben als Funktion der Reaktionszeit nach der Sulfonierung,

Fig. 3 die Protonenleitfähigkeit einer sulfonierten Poly(1,3,4- oxadiazol)-Membran als Funktion der Temperatur.

**Beispiel 1**

Synthese von sulfoniertem Poly(1,3,4-oxadiazol)

*Direkte Synthese*

Zunächst wurde Polyphosphorsäure (PPA) in einen Kolben gegeben und unter einer trockenen Stickstoffatmosphäre auf 100˚C erhitzt. Anschließend wurde Hydrazinsulfatsalz (HS, > 99 %, Aldrich) zur Polyphosphorsäure hinzugefügt und durch Rühren und Erhitzen des Reaktionsmediums homogenisiert.

Nach Erreichen der Reaktionstemperatur wurde Dicarboxyldiazid 4,4'-Diphenylether, DPE (99 %, Aldrich), in den Kolben hinzugegeben. Das molare Verdünnungsverhältnis (PPA/HS) und das molare Monomerverhältnis (HS/DPE) wurden konstant bei 10 bzw. 1,2 gehalten. Das molare Verdünnungsverhältnis (PPA/HS) und das molare Monomerverhältnis (HS/DPE) wurden entsprechend einer früheren Studie ausgewählt, in der die Synthese von Poly(ether-1,3,4-oxadiazol) mit Hilfe eines statistischen experimentellen Designs optimiert worden war (Gomes et al., 2001, s. o.).

Nach einer Reaktionszeit von DPE und HS von sechs Stunden wurde das Reaktionsmedium in Wasser mit 5% w/v von Natriumhydroxid (99 %, Vetec) gegeben, um das Polymer auszufällen. Der pH-Wert dieser Polymersuspension wurde kontrolliert entsprechend Gomes et al., 2004 (s. o.). Die chemische Struktur des Polymers ist wie folgt:

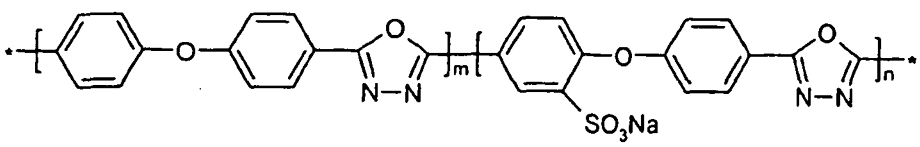

Es wurde sulfoniertes Poly(1,3,4-oxadiazol) mit molarem Verhältnis von Schwefel zu Kohlenstoff (S/C) von 0,124 gemäß Elementaranalyse erhalten, bei 5,7 Gew.-% Schwefel und einem Sulfonierungsgrad von 32,5 %, wobei der Sulfonierungsgrad 100 ist, wenn das molare Verhältnis von Schwefel zu Kohlenstoff (S/C) gleich 0,38 ist. Das sulfonierte Poly(1,3,4-oxadiazol) war in den Lösungsmitteln NMR und DMSO löslich und wies ein durchschnittliches Molekulargewicht von 470.000 g/mol auf.

Das durchschnittliche Molekulargewicht wurde mittels SEC gemessen. Ein Viscotek SEC-Apparat, der mit Eurogel-Säulen SEC 10.000 und PSS Gram 100, 1.000 mit Seriennummern HC286 und 1515161 mit einer Größe von 8 x 300 mm ausgestattet war, wurde verwendet, um die gewichtsgemittelten Molekulargewichte der Polymer-Proben zu bestimmen. Die Vorrichtung wurde mittels Polystyren-Standards (Merck) kalibriert, wobei die Polystyren-Standards gewichtsgemittelte Molekülgewichte im Bereich von 309 bis 944.000 g/mol aufwiesen. Eine Lösung mit 0,05 M Lithiumbromid in DMAc wurde als Träger verwendet.

In Fig. 1 ist das Infrarotspektrum des sulfonierten Poly(1,3,4-oxadiazols) mit einem mittels Elementaranalyse gemessenen Molarverhältnis von Schwefel zu Kohlenstoff (S/C) von 0,124 gezeigt. Die Graphik zeigt, dass die Sulfonsäuregruppen chemisch, d.h. kovalent, an die Polymerkette gebunden sind. Zusätzlich zu den Verteilungsmaxima bei 1.600 und 1.487 $cm^{-1}$, die aus C=C-Streckung der aromatischen Gruppen resultieren, sind die Maxima bei 1.467 $cm^{-1}$ und 1.413 $cm^{-1}$ mit einer C=N-Streckung der Oxadiazol-Ringgruppe korreliert, das Maximum bei 1.085 $cm^{-1}$ mit einer -C-O-C-Streckung. Die asymmetrische $SO_2$-Streckung hat ein Maximum bei 1.394 $cm^{-1}$.

In kovalenten Sulfonaten, R-$SO_2$-OR, erscheint die asymmetrische $SO_2$-Streckungsvibrationsbande bei 1.420 bis 1.310 $cm^{-1}$. Symmetrische $SO_3$-Streckungsvibrationsbanden von Sulfonsäuresalzen ($SO_3$-M+) erscheinen bei 1.070 bis 1.030 $cm^{-1}$. Für das Polyoxadiazol, das in PPA aus HS synthetisiert wurde, wird dieses Band bei 1.030 $cm^{-1}$ beobachtet.

*Post-Sulfonierung*

Ein sulfoniertes Poly(1,3,4-oxadiazol)-Polymer wurde unter verschieden langen Dauern post-sulfoniert, um den Sulfonierungsgrad zu erhöhen.

Das als Ausgangsmaterial verwendete sulfonierte Poly(1,3,4-oxadiazol)-Polymer, das unter den Bedingungen gemäß Gomes et al. (2004, 2007, s. o.) synthetisiert worden war, wies gemäß Elementaranalyse, Infrarotspektroskopie und NMR ein molares Verhältnis von Schwefel zu Kohlenstoff (S/C) von 0,057 bis 0,072 auf und enthielt 4,1 Gew.-% Schwefel. Der Sulfonierungsgrad betrug von 15 % bis 18,9 %. Das Polymer war lösbar im Lösungsmittel NMP und wies gemäß SEC ein durchschnittliches Molekulargewicht von 358.000 g/mol auf.

Es wurde ein Gramm dieses sulfonierten Poly(1,3,4-oxadiazol)-Polymers in 15 ml konzentrierter Salzsäure (95 % bis 98 %) aufgelöst und bei 45˚C stark gerührt. Diese Behandlung wurde für unterschiedliche Zeiträume von einem Tag (24 Std.) bis 40 Tage (960 Std.) ausgeführt. Anschließend wurde die Polymerlösung allmählich in eiskaltem $K_2CO_3$ enthaltendem Wasser unter mechanischer Anregung ausgefällt, bis ein neutraler pH-Wert erreicht war.

Das Polymerprezipitat wurde gefiltert, mehrfach mit destilliertem Wasser gewaschen und 12 Stunden lang bei 80˚C getrocknet. In Fig. 2 sind die mittels Elementaranalyse bestimmten Sulfonierungsgrade gezeigt, die nach den unterschiedlichen Zeiträumen der Nachbehandlung erreicht wurden.

Es ergibt sich aus Fig. 2, dass der Sulfonierungsgrad für jeden Zeitraum gut kontrolliert werden konnte. Ein Nachteil dieses Verfahrens gegenüber der erfindungsgemäßen direkten Synthese ist jedoch die längere Dauer, um den gleichen Sulfonierungsgrad zu erreichen. Zum Beispiel wurde ein Sulfonierungsgrad von 32,5 % erst nach 11 Tagen erreicht.

Ein weiterer Nachteil besteht darin, dass ein geringeres Molekulargewicht in der Größenordnung von $10^4$ g/mol erreicht wurde, bei einer Post-Sulfonierungs-Reaktionszeit von mehr als neun Tagen, um ein Molarverhältnis von Schwefel zu Kohlenstoff (S/C) > 0,12 bzw. einen Sulfonierungsgrad von mehr als 31 % zu erreichen.

Daher stellt die direkte Sulfonierungsreaktion unter den optimierten Sulfonierungs-Reaktions-Bedingungen ein effizientes Verfahren dar, sulfonierte Poly(1,3,4-oxadiazole) mit geringeren Reaktionszeiten und höheren Molekulargewichten herzustellen als durch Post-Sulfonierungsreaktionen.

*Membranherstellung*

Homogene Membranen wurden aus sulfonierten Poly(1,3,4-oxadiazol)-Polymerlösungen mit einer Konzentration von 4 Gew.-% in DMSO gegossen. Nach dem Gießen wurde das DMSO in einem Vakuumofen bei 60˚C 24 Stunden lang verdampft. Zur Entfernung von weiteren restlichen Lösungsmitteln wurden die Membranen in ein Wasserbad bei 60˚C 48 Stunden lang eingetaucht und in einem Vakuumofen bei 60˚C 24 Stunden lang getrocknet. Die endgültige Dicke der Membranen betrug etwa 30 μm.

Die sulfonierten Poly(1,3,4-oxadiazol)-Membranen wurden in ihre Säureform konvertiert, indem sie bei Raumtemperatur 24 Stunden lang in 1,6M $H_3PO_4$ eingetaucht wurden und anschließend für 2 mal 24 Stunden in ein Wasserbad eingetaucht wurden, um eine vollständige Entfernung von restlicher Phosphorsäure sicherzustellen.

## Beispiel 2

*Wasseraufnahme und Oxidationsstabilität*

Die Membranen wurden vor der Messung 24 Stunden lang bei 80˚C in einem Vakuum getrocknet. Nach der Messung der Gewichte der trockenen Membranen wurden die Proben 24 Stunden lang bei 25˚C und bei 60˚C in deionisiertes Wasser eingetaucht.

Vor der Messung der Gewichte der hydratisierten Membranen wurde das Wasser von den Membranoberflächen durch Abtupfen mit Papiertüchern entfernt. Die Wasseraufnahme wurde gemäß der folgenden Formel berechnet:

$$\text{Wasseraufnahme (in Gew.-\%)} = (m_{nass} - m_{trocken})/m_{trocken} \times 100,$$

wobei $m_{nass}$ und $m_{trocken}$ die Gewichte der trockenen und der hydratisierten Membranen sind.

Die oxidative Stabilität der Membranen wurde untersucht, indem die Membranen eine Stunde lang bei 80˚C in Fenton's Reagenz (3 % $H_2O_2$ mit 2 ppm $FeSO_4$) eingetaucht wurden. Die Resultate sind in Tabelle 1 gezeigt.

Tabelle 1: Wasseraufnahme und Oxidationsstabilität von sulfonierten Poly(1,3,4-oxadiazol)-Membranen

| S/C (Molarverhältnis)[a] | Wasseraufnahme (Gew.-%) | | Restmenge nach oxidativem Test (Gew.-%)[c] |
|---|---|---|---|
| | 25°C | 60°C | |
| 0,065[b] | 19 | 21 | 98 |
| 0,124 | 37 | 42 | 98 |

[a] gemäß Elementaranalyse
[b] Daten von Gomes et al., 2007 (s. o.)
[c] nach einstündigem Bad in Fenton's Lösung bei 80°C

Wie erwartet, steigt die Wasseraufnahme mit steigendem Sulfonierungsgrad und mit der Temperatur. Mit steigendem Sulfonierungsgrad führt die Erhöhung der Anzahl der Sulfonsäuregruppen zu einer höheren Wasserabsorption. Das Wasser innerhalb der Membran stellt einen Träger für Protonen dar und führt zu den erhöhten Protonenleitfähigkeitswerten, die mit Membranen mit höherem Molarverhältnis von Schwefel zu Kohlenstoff (S/C) bzw. mit höherem Sulfonierungsgrad einhergehen.

Die Membranstabilität gegenüber Oxidation wurde untersucht, indem die Membran eine Stunde lang bei 80°C in Fenton's Reagenz lang getränkt wurde. Diese Methode wurde benutzt, um eine oxidative Reaktion durch den Angriff von Radikalen (HO· und HOO·) während des Betriebs von Brennstoffzellen zu simulieren.

Die sulfonierten Poly(1,3,4-oxadiazol)-Membranen zeigten eine hohe oxidative Stabilität, wobei sie im Test 98 % ihres Gewichtes behielten. Die hohe chemische Stabilität der sulfonierten Poly(1,3,4-oxadiazol)-Membranen kann dadurch erklärt werden, dass die chemische Stabilität der Polymerketten durch die heterozyklischen Ringe erhöht wird.

Das Molarverhältnis von Schwefel zu Kohlenstoff wurde durch elementare Analyse bestimmt. Ebenso wurde der Überrest nach den oxidativen Tests durch Elementaranalyse bestimmt. Die Daten in der dritten Zeile stammen von Gomes et al. (2007).

**Beispiel 3**

*Messung der Protonenleitfähigkeit*

Die Protonenleitfähigkeit wurde mittels AC-Impedanzspektroskopie bei Frequenzen zwischen 10 und $10^6$ Hz bei einer Signalamplitude von ≤ 100 mV gemessen und aus dem Impedanzmodul bei verschwindender Phasenverschiebung auf der Hochfrequenzseite bestimmt. Die Protonenleitfähigkeit der Proben wurde bei 80°C und einer relativen Feuchtigkeit zwischen 15 % und 100 % ermittelt. Die Impedanzmessungen wurden an Stapeln von bis zu 5 Membranen ausgeführt, wobei die Stapel jeweils eine ähnliche Gesamtdicke von ungefähr 500 μm aufwiesen. Die relative Feuchtigkeit wurde kontrolliert, indem Stickstoffgas durch Wasser geblasen wurde, das bei einer geeigneten Temperatur zwischen 20°C und 80°C erhitzt wurde.

In Fig. 3 ist die Protonenleitfähigkeit der sulfonierten Poly(1,3,4-oxadiazol)-Membran als Funktion der Temperatur dargestellt. Die Membran wies ein S/C = 0,124 auf, gemessen bei 80°C und relativer Feuchtigkeit von 15% bis 100%.

Fig. 3 zeigt, dass eine hohe Protonenleitfähigkeit erreicht wurde und unter anderem mit der Struktur der sulfonierten Poly(1,3,4-oxadiazole) erklärt werden kann. Die sulfonierten Poly(1,3,4-oxadiazole) beinhalten in ihrer Struktur sowohl Donor- als auch Akzeptor-Wasserstoffatome, die Protonen durch Dissoziation von ihrem anionischen Gegenionen leiten können.

Eine weitere Erklärung für die hohe Protonenleitfähigkeit sind die Hydrophilizität und Flexibilität der Polymerketten aufgrund an die Hauptketten gebundenen Diphenylether-Gruppen, die wahrscheinlich auch bei niedriger Feuchtigkeit Protonensprünge durch die pyridin-ähnlichen N-Stellen und die Sulfonsäuregruppen begünstigen.

Bei 80°C und einer relativen Feuchtigkeit von 100 % wurde bei einer gemäß Gomes et al., 2007 (s. o.) hergestellten sulfonierten Poly(1,3,4-oxadiazol)-Membran mit S/C = 0,065 eine Protonenleitfähigkeit von 10 mS/cm erreicht, während im Unterschied dazu unter den gleichen Bedingungen die sulfonierte Poly(1,3,4-oxadiazol)-Membran mit S/C = 0,124 eine Protonenleitfähigkeit von 120 mS/cm aufwies. Das Resultat erklärt sich aus dem höheren Sulfonierungsgrad des sulfonierten Poly(1,3,4-oxadiazols) mit S/C = 0,124.

**Patentansprüche**

1. Verfahren zur Herstellung eines sulfonierten Poly(1,3,4-oxadiazol)-Polymers, bei dem Sulfonsäuregruppen kovalent mit der Hauptkette des Polymers verbunden sind, mit einem Molekulargewicht in der Größenordnung von $10^5$ g/Mol und einem molaren Verhältnis von Schwefel zu Kohlenstoff (S/C) zwischen 0,085 und 0,38, in einer einstufigen

Polykondensationsreaktion eines Hydrazinsulfatsalzes mit nicht sulfonierten Dicarboxylsäuren oder deren nicht sulfonierten Derivaten in Polyphosphorsäure mit den folgenden Schritten:

- Erhitzen der Polyphosphorsäure auf eine Temperatur von 100 ˚C,
- Herstellen einer Lösung durch Vermischen des Hydrazinsulfatsalzes mit einer oder mehreren Dicarboxylsäuren oder deren Derivaten in Polyphosphorsäure, wobei das molare Verdünnungsverhältnis von Polyphosphorsäure zu Hydrazinsulfatsalz bei 10 und das molare Monomerverhältnis von Hydrazinsulfatsalz zu Dicarboxylsäure oder deren Derivaten bei 1,2 gehalten werden,
- Erhitzen der Lösung in einem Temperaturbereich von 160 ˚C bis 200 ˚C unter einer inerten Gasatmosphäre in einem Zeitraum zwischen 4 und 24 h,
- Ausfällen des Polymers in einer Basislösung.

**2.** Verfahren nach Anspruch 1, **dadurch gekennzeichnet, dass** das Polymer in der Basislösung neutralisiert wird.

**3.** Verfahren nach Anspruch 1 oder 2, **dadurch gekennzeichnet, dass** die nicht sulfonierten Dicarboxylsäuren oder deren nicht sulfonierte Derivate eine aromatische und/oder heteroaromatische Dicarboxylsäure oder deren Derivate umfassen, wobei insbesondere die aromatische und/oder heteroaromatische Dicarboxylsäure oder deren Derivat wenigstens einen Elektronen-Donor-Substituenten oder ein Multi-Ring-System mit wenigstens einem -O-Verbindungsglied zwischen den aromatischen Ringen aufweist.

**4.** Verfahren nach einem der Ansprüche 1 bis 3, **dadurch gekennzeichnet, dass** das Erhitzen in einem Temperaturbereich zwischen 160 ˚C und 180 ˚C erfolgt und/oder das Erhitzen für eine Dauer bis zu 16 h erfolgt, insbesondere zwischen 6 und 8 h.

**5.** Sulfoniertes Poly(1,3,4-oxadiazol)-Polymer, insbesondere Homo- und/oder Copolymer, bei dem Sulfonsäuregruppen kovalent mit der Hauptkette des Polymers verbunden sind, mit einem Molekulargewicht in der Größenordnung von $10^5$ g/Mol und einem molaren Verhältnis von Schwefel zu Kohlenstoff (S/C) zwischen 0,085 und 0,38, erhältlich in einem Verfahren nach einem der Ansprüche 1 bis 4.

**6.** Sulfoniertes Poly(1,3,4-oxadiazol)-Polymer nach Anspruch 5, **dadurch gekennzeichnet, dass** das Polymer ein sulfoniertes Poly(1,3,4-oxadiazol)-Homopolymer ist oder enthält und/oder das Polymer ein sulfoniertes Poly(1,3,4-oxadiazol)-Copolymer ist oder enthält.

**7.** Sulfoniertes Poly(1,3,4-oxadiazol)-Polymer nach Anspruch 5 oder 6, **dadurch gekennzeichnet, dass** das sulfonierte Poly(1,3,4-oxadiazol)-Polymer einen Sulfonierungsgrad von 23 bis 100 aufweist, insbesondere zwischen 28 und 100, insbesondere zwischen 35 und 100, wobei insbesondere das sulfonierte Poly(1,3,4-oxadiazol)-Polymer ein molares Verhältnis von Schwefel zu Kohlenstoff zwischen 0,1 und 0,38 aufweist, insbesondere zwischen 0,125 und 0,38.

**8.** Sulfoniertes Poly(1,3,4-oxadiazol)-Polymer nach einem der Ansprüche 5 bis 7, **dadurch gekennzeichnet, dass** das Poly(1,3,4-oxadiazol) ein Poly(ethersulfonoxadiazol), ein Poly(etherketonoxadiazol), ein Poly(etheramidoxadiazol) oder ein Poly(etherimidoxadiazol) ist.

**9.** Membran für Brennstoffzellen aus einem sulfonierten Poly-(1,3,4-oxadiazol)-Polymer nach einem der Ansprüche 5 bis 8, bei dem Sulfonsäuregruppen mit der Hauptkette des Polymers verbunden sind, wobei die Membran eine Feed-Seite und eine Permeat-Seite aufweist, wobei insbesondere die Membran eine Trennschicht umfasst, die Mischungen oder Copolymere des sulfonierten Poly(1,3,4-oxadiazol)-Polymers mit anderen Polymeren enthält, wobei insbesondere die Membran mit Säuren und/oder Oligomeren dotiert ist, die funktionelle Säuregruppen und/oder Polymere mit funktionellen Säuregruppen aufweisen, wobei insbesondere die Membran eine Protonenleitfähigkeit von wenigstens 4,9 x $10^{-2}$ S/cm bei 80 ˚C und relativer Feuchtigkeit von 15 % aufweist.

**10.** Brennstoffzelle mit einer Membran nach Anspruch 9, wobei insbesondere die Brennstoffzelle bei einer relativen Feuchtigkeit von weniger als 20 % funktioniert.

**11.** Verfahren zur Herstellung einer Brennstoffzelle mit den folgenden Schritten:

- Herstellen einer Membran nach Anspruch 9, mit einer Feed-Seite und einer Permeat-Seite;
- Bringen der Membran zwischen zwei poröse Katalysatorelektroden aus Platin oder einer Platinlegierung,

wobei die Feed-Seite der Membran eine Anode kontaktiert und die Permeat-Seite der Membran eine Kathode kontaktiert.

**12.** Verfahren nach Anspruch 11, **dadurch gekennzeichnet, dass** die Membran eine Schicht aus einem Polymerelektrolyt mit dem sulfonierten Poly(1,3,4-oxadiazol)-Polymer und/oder Copolymeren, die aus dem sulfonierten Poly (1,3,4-oxadiazol)-Polymer abgeleitet sind, umfasst, wobei in der Polymerelektrolytschicht Sulfonsäuregruppen chemisch bzw. kovalent an die Polymerhauptketten gebunden sind, wobei insbesondere die Schicht Mischungen oder Copolymere der Polymere gemäß einem der Ansprüche 5 bis 8 mit anderen Polymeren aufweisen.

**13.** Verfahren nach einem der Ansprüche 11 oder 12, **dadurch gekennzeichnet, dass** ein Brennstoff, der die zu reagierenden Komponenten beinhaltet, in die Anode gefüllt wird, wobei Protonen durch die Membran migrieren können, wobei insbesondere als Brennstoff, der der Anode zugeführt wird, Wasserstoff, Methanol oder Ethanol verwendet wird, wobei insbesondere Methanol oder Ethanol als Flüssigkeiten oder als Mischungen aus Wasser und gasförmigem Methanol bzw. Ethanol verwendet werden.

**14.** Verfahren nach einem der Ansprüche 11 bis 13, **dadurch gekennzeichnet, dass** in den Raum mit der Kathode ein Oxidationsmittel, insbesondere Sauerstoff, gefüllt wird, wobei insbesondere die erhaltenen Komponenten in den Kathodenraum zurückgezogen werden.

## Claims

**1.** A method of producing a sulphonated poly(1,3,4-oxadiazole) polymer, in which sulphonic acid groups are covalently bonded to the main chain of the polymer with a molecular weight of the order of $10^5$ g/Mol and a molar ratio of sulphur to carbon (S/C) between 0.085 and 0.38, in a single-stage polycondensation reaction of a hydrazine sulphate salt with non-sulphonated dicarboxylic acids or their non-sulphonated derivatives in polyphosphoric acid with the following steps:

- heating the polyphosphoric acid to a temperature of 100˚C,
- producing a solution by mixing the hydrazine sulphate salt with one or more dicarboxylic acids or their derivatives in polyphosphoric acid, wherein the molar dilution ratio of polyphosphoric acid to hydrazine sulphate salt is maintained at 10 and the molar monomer ratio of hydrazine sulphate salt to dicarboxylic acid or their derivatives is maintained at 1.2,
- heating the solution in a temperature range of 160˚C to 200˚C under an inert gas atmosphere in a period of time of between 4 and 24 h,
- precipitating the polymer in a basic solution.

**2.** A method as claimed in Claim 1, **characterised in that** the polymer is neutralised in the basic solution.

**3.** A method as claimed in Claim 1 or 2, **characterised in that** the non-sulphonated dicarboxylic acids or their non-sulphonated derivatives include an aromatic and/or heteroaromatic dicarboxylic acid or its derivaties, wherein, in particular, the aromatic and/or heteroaromatic dicarboxylic acid or its derivatives have at least one electron donor substituent or a multi-ring system with at least one -O-bonding element between the aromatic rings.

**4.** A method as claimed in one of Claims 1 to 3, **characterised in that** the heating is effected in a temperature range between 160˚C and 180˚C and/or the heating is effected for a period of up to 16 h, particularly between 6 and 8 h.

**5.** A sulphonated poly(1,3,4-oxadiazole) polymer, particularly a homopolymer and/or copolymer, in which the sulphonic acid groups are covalently bonded to the main chain of the polymer, with a molecular weight of the order of $10^5$ g/Mol and a molar ratio of sulphur to carbon (S/C) between 0.085 and 0.38, obtainable in a method as claimed in one of Claims 1 to 4.

**6.** A sulphonated poly(1,3,4-oxadiazole) polymer as claimed in Claim 5, **characterised in that** the polymer is or includes a sulphonated poly(1,3,4-oxadiazole) homopolymer and/or the polymer is or contains a sulphonated poly (1,3,4-oxadiazole) copolymer.

**7.** A sulphonated poly(1,3,4-oxadiazole) polymer as claimed in Claim 5 or 6, **characterised in that** the sulphonated poly(1,3,4-oxadiazole) polymer has a degree of sulphonation of 23 to 100, particularly between 28 and 100, particularly between 35 and 100, wherein, in particular, the sulphonated poly(1,3,4-oxadiazole) polymer has a molar ratio of sulphur to carbon between 0.1 and 0.38, particularly between 0.125 and 0.38.

**8.** A sulphonated poly(1,3,4-oxadiazole) polymer as claimed in one of Claims 5 to 7, **characterised in that** the poly (1,3,4-oxadiazole) is a poly(ethersulphone oxadiazole), a poly(etherketone oxadiazole), a poly(etheramide oxadiazole) or a poly(etherimide oxadiazole).

**9.** A membrane for fuel cells comprising a sulphonated poly(1,3,4-oxadiazole) polymer as claimed in one of Claims 5 to 8, in which the sulphonic acid groups are bonded to the main chain of the polymer, wherein the membrane has a feed side and a permeate side, wherein, in particular, the membrane includes a partition layer, which includes mixtures or copolymers of the sulphonated poly(1,3,4-oxadiazole) polymer with other polymers, wherein, in particular, the membrane is dosed with acids and/or oligomers, which include functional acid groups and/or polymers with functional acid groups, wherein, in particular, the membrane has a proton conductivity of at least $4.9 \times 10^{-2}$ S/cm at 80˚C and a relative moisture of 15%.

**10.** A fuel cell with a membrane as claimed in Claim 9, wherein, in particular, the fuel cell functions at a relatively moisture of less than 20%.

**11.** A method of manufacturing a fuel cell with the following steps:

- producing a membrane as claimed in Claim 9 with a feed side and a permeate side;
- bringing the membrane between two porous catalyst electrodes of platinum or a platinum alloy, wherein the feed side of the membrane contacts an anode and the permeate side of the membrane contacts a cathode.

**12.** A method as claimed in Claim 11, **characterised in that** the membrane includes a layer of a polymer electrolyte with the sulphonated poly(1,3,4-oxadiazole) polymer and/or copolymers, which are derived from the sulphonated poly(1,3,4-oxadiazole) polymer, wherein sulphonic acid groups in the polymer electrode are chemically or covalently bonded to the polymer main chains, wherein, in particular, the layer includes mixtures or copolymers of the polymers as claimed in one of Claims 5 to 8 with other polymers.

**13.** A method as claimed in one of Claims 11 or 12, **characterised in that** a fuel, which contains the components to be reacted, is introduced into the anode, wherein protons can migrate through the membrane, wherein, in particular, hydrogen, methanol or ethanol is used as the fuel, which is fed to the anode, wherein, in particular, methanol or ethanol are used in the form of liquids or as mixtures of water and gaseous methanol or ethanol.

**14.** A method as claimed in one of Claims 11 to 13, **characterised in that** an oxidising agent, particularly oxygen, is introduced into the space with the cathode, wherein, in particular, the components obtained are withdrawn into the cathode space.

## Revendications

**1.** Procédé de production d'un polymère de poly(1,3,4-oxadiazole) sulfoné, dans lequel les groupes acide sulfonique sont liés de façon covalente à la chaîne principale du polymère, présentant une masse moléculaire de l'ordre de grandeur de $10^5$ g/mol et un rapport molaire entre soufre et carbone (S/C) compris entre 0,085 et 0,38, lors d'une réaction de polycondensation en une étape d'un sel de sulfate d'hydrazine avec des acides dicarboxyliques non sulfonés ou leurs dérivés non sulfonés dans de l'acide polyphosphorique, comportant les étapes suivantes :

- chauffage de l'acide polyphosphorique à une température de 100 ˚C,
- préparation d'une solution par mélange du sel de sulfate d'hydrazine avec un ou plusieurs acides dicarboxyliques ou leurs dérivés dans l'acide polyphosphorique, où le rapport de dilution molaire entre acide polyphosphorique et sel de sulfate d'hydrazine est de 10 et le rapport molaire de monomères entre sel de sulfate d'hydrazine et acide dicarboxylique ou ses dérivés est maintenu à 1,2,
- chauffage de la solution dans une plage de température comprise entre 160 ˚C et 200 ˚C, sous une atmosphère de gaz inerte et sur une durée comprise entre 4 et 24 h,
- précipitation du polymère dans une solution de base.

**2.** Procédé selon la revendication 1, **caractérisé en ce que** le polymère est neutralisé dans la solution de base.

**3.** Procédé selon la revendication 1 ou 2, **caractérisé en ce que** les acides dicarboxyliques non sulfonés ou leurs dérivés non sulfonés comportent un acide dicarboxylique aromatique et/ou hétéroaromatique ou ses dérivés, l'acide dicarboxylique aromatique et/ou hétéroaromatique ou son dérivé présentant en particulier au moins un substituant donneur d'électrons ou un système polycyclique avec au moins un élément de liaison -O- entre les cycles aromatiques.

**4.** Procédé selon l'une des revendications 1 à 3, **caractérisé en ce que** le chauffage se fait dans une plage de température comprise entre 160 ˚C et 180 ˚C et/ou **en ce que** le chauffage se fait pendant une durée allant jusqu'à 16 h, en particulier comprise entre 6 et 8 h.

**5.** Polymère de poly(1,3,4-oxadiazole) sulfoné, en particulier homopolymère et/ou copolymère, dans lequel les groupes acide sulfonique sont liés de façon covalente à la chaîne principale du polymère, présentant une masse moléculaire de l'ordre de grandeur de $10^5$ g/mol et un rapport molaire entre soufre et carbone (S/C) compris entre 0,085 et 0,38, et pouvant être obtenu dans un procédé selon l'une des revendications 1 à 4.

**6.** Polymère de poly(1,3,4-oxadiazole) sulfoné selon la revendication 5, **caractérisé en ce que** le polymère est ou contient un homopolymère de poly(1,3,4-oxadiazole) sulfoné et/ou **en ce que** le polymère est ou contient un copolymère de poly(1,3,4-oxadiazole) sulfoné.

**7.** Polymère de poly(1,3,4-oxadiazole) sulfoné selon la revendication 5 ou 6, **caractérisé en ce que** le polymère de poly(1,3,4-oxadiazole) sulfoné présente un degré de sulfonation compris entre 23 et 100, en particulier entre 28 et 100, en particulier entre 35 et 100, où en particulier le polymère de poly(1,3,4-oxadiazole) sulfoné présente un rapport molaire entre soufre et carbone compris entre 0,1 et 0,38, en particulier entre 0,125 et 0,38.

**8.** Polymère de poly(1,3,4-oxadiazole) sulfoné selon l'une des revendications 5 à 7, **caractérisé en ce que** le poly (1,3,4-oxadiazole) est un poly(éthersulfonoxadiazole), un poly(éthercétone-oxadiazole), un poly(étheramidoxadiazole) ou un poly(étherimidoxadiazole).

**9.** Membrane pour pile à combustible composée d'un polymère de poly(1,3,4-oxadiazole) sulfoné selon l'une des revendications 5 à 8, dans lequel les groupes acide sulfonique sont liés à la chaîne principale du polymère, la membrane présentant un côté alimentation et un côté perméat, la membrane comportant en particulier une couche de séparation qui contient des mélanges ou des copolymères du polymère de poly(1,3,4-oxadiazole) sulfoné avec d'autres polymères, où en particulier la membrane est dopée avec des acides et/ou des oligomères qui présentent des groupes acide fonctionnels et/ou des polymères ayant des groupes acide fonctionnels, où en particulier la membrane présente une conductivité des protons au moins égale à $4{,}9 \times 10^{-2}$ S/cm à 80 ˚C et à une humidité relative de 15 %.

**10.** Pile à combustible comportant une membrane selon la revendication 9, dans laquelle en particulier la pile à combustible fonctionne à une humidité relative inférieure à 20 %.

**11.** Procédé de fabrication d'une pile à combustible, comportant les étapes suivantes :

- fabrication d'une membrane selon la revendication 9, avec un côté alimentation et un côté perméat ;
- application de la membrane entre deux électrodes de catalyseur poreuses en platine ou en alliage de platine, où le côté alimentation de la membrane est en contact avec une anode et le côté perméat de la membrane est en contact avec une cathode.

**12.** Procédé selon la revendication 11, **caractérisé en ce que** la membrane comporte une couche composée d'un électrolyte polymère contenant le polymère de poly(1,3,4-oxadiazole) sulfoné et/ou des copolymères qui sont dérivés du polymère de poly(1,3,4-oxadiazole) sulfoné, où dans la couche d'électrolyte polymère des groupes acide sulfonique sont liés chimiquement ou de façon covalente à la chaîne principale du polymère, où en particulier la couche présente des mélanges ou des copolymères des polymères selon l'une des revendications 5 à 8 avec d'autres polymères.

**13.** Procédé selon la revendication 11 ou 12, **caractérisé en ce qu'**un combustible qui comporte les composants devant réagir est chargé dans l'anode, suite à quoi des protons peuvent migrer par la membrane, où on utilise en particulier comme combustible qui est amené à l'anode de l'hydrogène, du méthanol ou de l'éthanol, où on utilise en particulier du méthanol ou de l'éthanol en tant que fluides ou en tant que mélanges d'eau et de méthanol ou d'éthanol gazeux.

**14.** Procédé selon l'une des revendications 11 à 13, **caractérisé en ce que** dans l'espace avec la cathode est chargé un agent oxydant, en particulier de l'oxygène, suite à quoi en particulier les composants obtenus sont ramenés dans l'espace de la cathode.

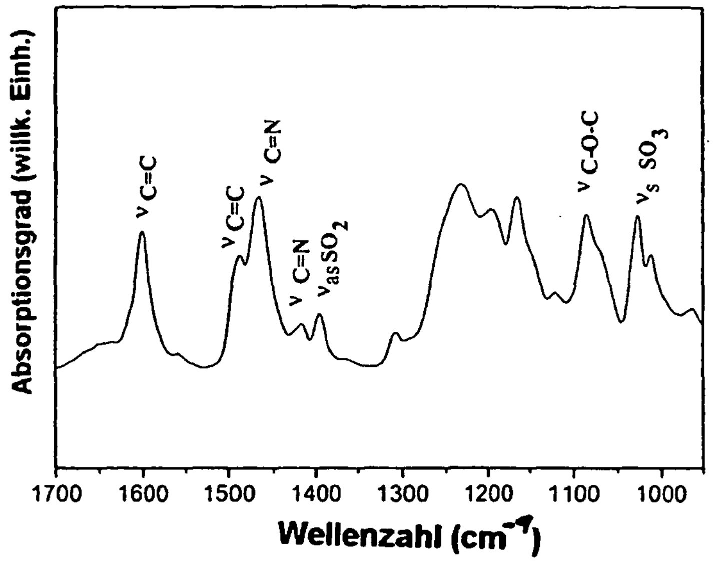

Absorptionsgrad (willk. Einh.)
ν C=C
ν C=C
ν C=N
ν C=N
ν as SO2
ν C-O-C
ν s SO3
1700
1600
1500
1400
1300
1200
1100
1000
Wellenzahl (cm-1)


Fig. 1

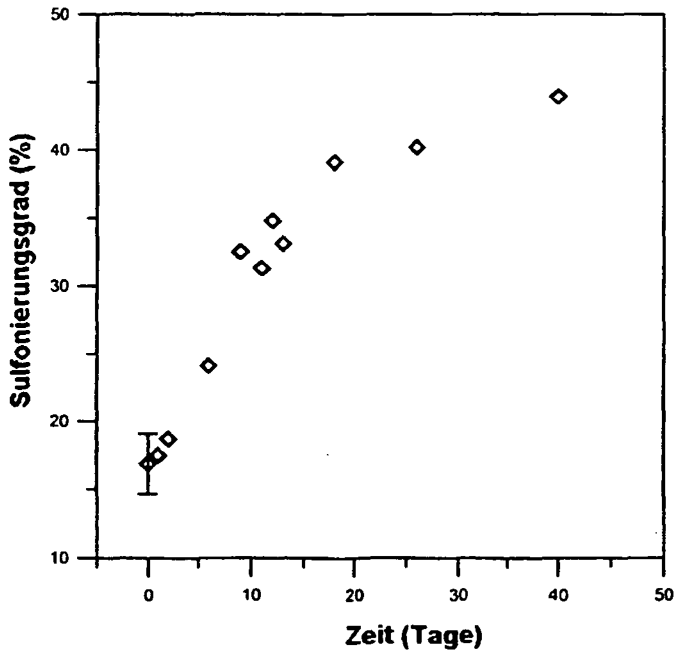

Sulfonierungsgrad (%)
50
40
30
20
10
0
10
20
30
40
50
Zeit (Tage)


Fig. 2

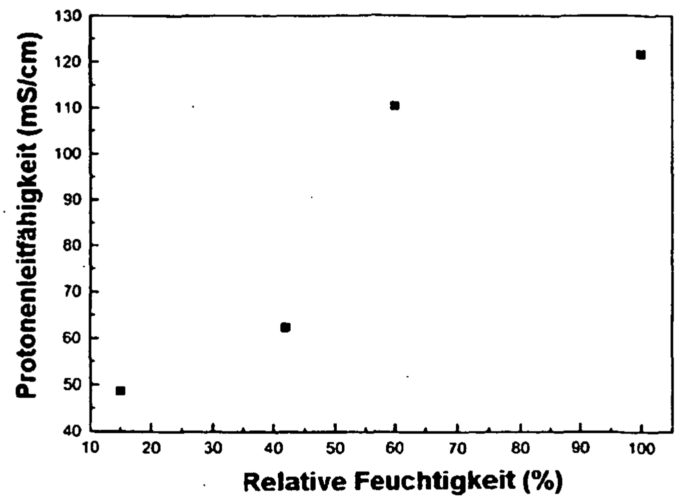
Protonenleitfähigkeit (mS/cm)
130
120
110
100
90
80
70
60
50
40
10
20
30
40
50
60
70
80
90
100
Relative Feuchtigkeit (%)

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 11204119 A
- US 4330654 A
- JP 11116679 A
- JP 9073908 A
- JP 63118331 B
- RU 2263685
- DE 10246373 A1
- CA 2499946 A1
- US 4634530 A
- KR 102006001626A A


### In der Beschreibung aufgeführte Nicht-Patentliteratur


- **D. Gomes ; C.P. Borges ; J.C. Pinto.** *Polymer,* 2001, vol. 42, 851-865
- **D. Gomes.** *Polymer,* 2004, vol. 45, 4997-5004
- **D. Gomes ; S.P. Nunes ; J.C. Pinto ; C.P. Borges.** *Polymer,* 2003, vol. 44, 3633-3639
- **Gomes et al.** Study of the synthesis of poly(4,4'-diphenylether-1, 3, 4-oxadiazole) in solutions of poly(phosphoric acid. *Polymer,* 2001, vol. 42, 851-865
- **E.R. Hensema ; J.P. Boom ; M.H.V. Mulder ; C.A. Smolders.** *Polym. Sci.: Part A: Polym. Chem,* 1994, vol. 32, 513-525
- **E.R. Hensema ; M.E.R. Sena ; M.H.V. Mulder ; C.A. Smolders.** *J. Polym. Sci.: Part A: Polym. Chem.,* 1994, vol. 32, 527-537
- **D. Gomes ; J. Roeder ; M.L. Ponce ; S.P. Nunes.** Characterization of partially sulfonated polyoxadiazoles and oxadiazole-triazole copolymers. *Journal of Membrane Science,* 2007, vol. 295, 121-129
- **J. Roeder ; D. Gomes ; M.L. Ponce ; V. Abetz ; S.P. Nunes.** *Makromol. Chem. Phys,* 2007, vol. 208, 467-473